# EUROPEAN PATENT SPECIFICATION

(11) **EP 1 479 471 B1**
(45) Date of publication and mention of the grant of the patent: **09.07.2008**
(21) Application number: 04425361.5
(22) Date of filing: 19.05.2004
(51) Int. Cl.: B27B 5/22, B23D 47/02, B27B 5/06

(54) **A machine for machining panels**
Maschine zum Bearbeiten von Platten
Machine à usiner des panneaux

(30) Priority: 23.05.2003 IT BO20030325
(43) Date of publication of application: 24.11.2004
(73) Proprietor: SCM GROUP S.p.A., 47900 Rimini (IT)
(72) Inventor: Rossi, RIno, 47037 Rimini (IT)
(74) Representative: Lanzoni, Luciano

(56) References cited:
- EP-A- 1 205 285
- DE-A- 1 628 864
- US-A- 4 450 881

## Description

The present invention relates to a machine according to the preamble of claim 1 for machining panels made of wood or similar materials. More precisely, the machines in question are for machining panels made of wood or similar materials, and more specifically a machine for sawing panels, but it may also advantageously be used for machining other types of materials such as fibre materials, panes of glass or synthetic materials, etc.

The current machines for cutting wooden panels (the standard machines commonly know as circular saws) substantially consist of a support base with an upper portion forming a horizontal table divided into a fixed portion from which the cutting tool projects and a mobile portion, or carriage, mainly extending in a direction in which the panel to be cut slides.

The table - fixed portion has a slit, aligned with the direction of sliding, from which the portion of circular saw with a (nominally) horizontal axis projects.

On the worktable or close to it there may be various accessories for positioning, defining panel final dimensions, and for aiding panel handling.

The accessories are normally mounted on the machine according to the type of machining and the dimensions of the panels to be machined: for example, for very large panels an auxiliary frame is used, which may be connected to or integral with the mobile portion of the worktable for supporting the panel. This frame extends in a cantilever fashion transversally from one side of the table and is coplanar with the table.

This frame may slide parallel with the worktable, allowing it to be positioned relative to the tool, and is equipped with a fence with a graduated scale, mounted along one side of the frame, at a right angle to the length of the worktable, indicating the distances of each reference on the scale from the circular saw.

The panel to be cut is placed on the frame and positioned with one side against the fence so that one end of the side of the panel coincides with the fence reference indicating the desired length of the side, then the frame is stably attached to the mobile portion of the table and moved with the mobile portion towards the rotary blade, which cuts the panel to the required size.

These circular saw machines are increasingly used to also make slanting or angled cuts, relative to the position at a right angle to the direction of feed. To do this with the presence of the above-mentioned frame, at present a first solution requires the use of a second graduated fence independent of the frame and pivoting on the worktable close to the frame.

This fence, which has graduated references, is angled one way or the other relative to the circular saw, by moving it about its pivot point and with the possibility of adding to this, on the worktable, an auxiliary reference table (below the rod) with a curved configuration (known as a steady rest to experts in the field) for displaying the angle of inclination to be reached.

The frame which supports the panel to be cut and moves it in a synchronised fashion is then positioned close to the angled fence.

In a second known solution (see DE 9103189 U) the graduated fence positioned on the frame can be angled directly thanks to a connection between it and a type of protractor scale, on the frame, having a toothed profile for its discrete angular positioning which allows the graduated fence to be positioned at an angle on the frame.

The structures described above are not recommended for performing angled cuts on large panels.

The position of the supporting frame is fixed and transversal to the direction of panel feed towards the circular saw and, if the panel is positioned at an angle, the panel is not supported by the frame (support is reduced the greater the angle used for the cut relative to the direction of feed). In other words, the panel is often positioned cantilever style outside the worktable and the supporting frame.

This disadvantage is particularly significant when, due to the large panel dimensions, cutting precision depends on the fact that the entire panel surface is supported while the cut is made. The larger the portion of the panel which is not supported, the greater the deformations of the plane on which the panel lies may be, which may produce errors in the position and in the direction of the panel cutting line.

A third solution is known from document DE 1628864. This document discloses a supporting frame attached to a worktable and projecting from the same. A supporting table is rotatable joined to the supporting frame for supporting a panel which has to be machined with a preset angle with respect to a saw emerging from the worktable.

Another solution is known from document US 4450881. This document discloses a roller table for woodworking machines which can be moved in translation along a straight guideway and which is provided with a longitudinal adjustable supporting plate for the overhanging end of the workpieces.

US 445 0881 discloses all the features of the preamble of claim 1.

The aim of the present invention is to provide a machine for machining panels which has a supporting frame with an extremely flexible structure, that can be configured according to the type of machining required on the machine, that is to say, can be angled and positioned at the required angles so that the entire frame supporting surface can be used; all of this without making excessive changes to the existing, reliable architecture of the panel supporting frame.

Accordingly, the present invention fulfils this aim with a machine for machining panels comprising the combination of features of claim 1.

Preferred embodiments of the invention are described in the dependent claims and their advantages are apparent from the detailed description which follows, with reference to the accompanying drawings which illustrate a preferred embodiment of the invention provided merely by way of example without restricting the scope of the invention, and in which:
- Figure 1 is a side view with some parts cut away to better illustrate others of a machine for machining panels made in accordance with the present invention;
- Figures 2 and 3 are schematic top plan views of the machine for machining panels illustrated in Figure 1 in two different angular operating configurations;
- Figure 4 is a top plan view with some parts cut away to better illustrate others of the machine in the previous figures in a third operating configuration;
- Figure 5 is an enlarged illustration of a detail of part of the machine illustrated in Figure 4.

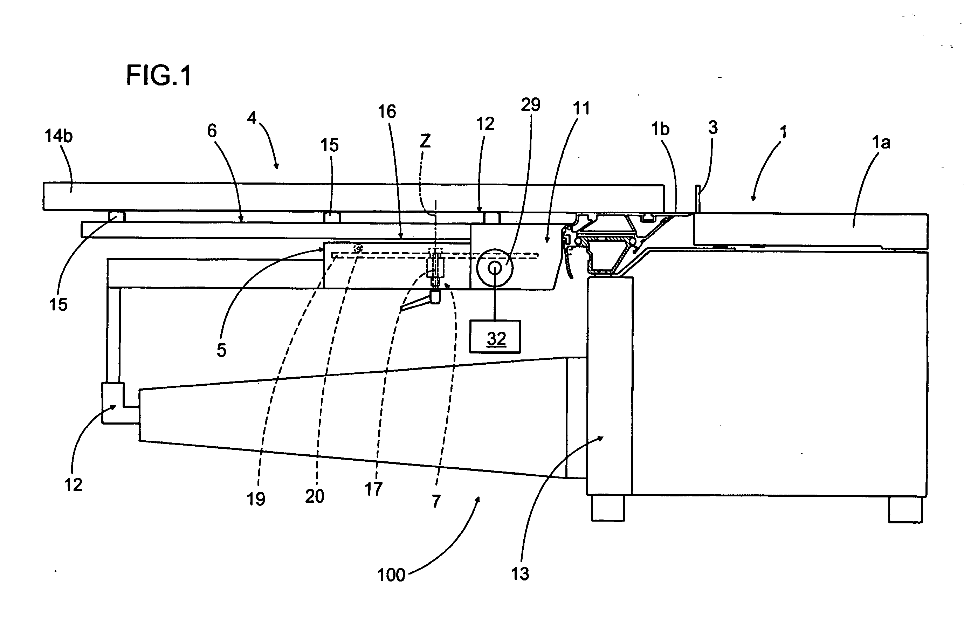

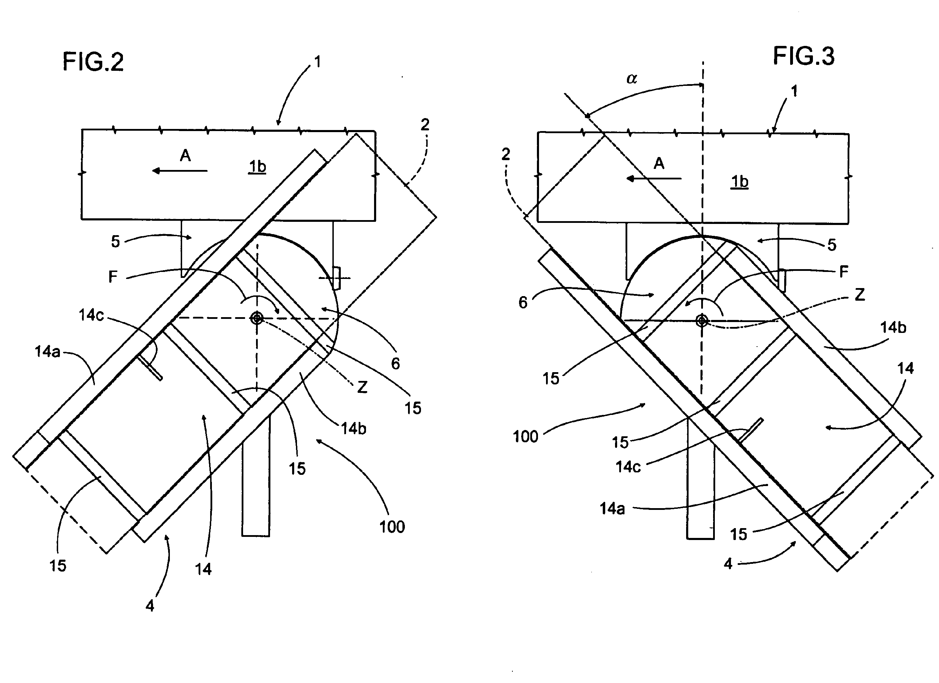

With reference to the accompanying drawings, and in particular with reference to Figure 1, the machine 100 disclosed is used for machining panels made of wood or similar material and basically comprises:
- a worktable 1 consisting of a fixed supporting portion 1a and a portion 1b mobile, in both directions, along a direction of feed A (see arrow in Figures 2 and 3) and designed to allow the panel 2 to be cut to slide (here the panel is only illustrated with a dashed line);
- a machining tool 3 positioned on the fixed portion 1a of the worktable 1 and partly projecting from the table 1 (in the case illustrated it is a circular saw, by way of example only);
- a supporting frame 4 for the panel 2 to be machined, attached to the mobile portion 1b of the worktable 1, coplanar with the table 1, and extending outside the dimensions of the table.

As illustrated in Figures 1 to 4, the frame 4 comprises:
- a lower portion 5, at a fixed angle to the direction of feed A and supporting
- an upper portion 6 which actually supports the panel 2 and can be positioned at an angle, in both directions (see arrows F in Figures 2 and 3), relative to the direction of feed A;
- means 7 for connecting the upper portion 6 to the lower portion 5, inserted between the upper portion 6 and the lower portion 5 of the frame 4 in such a way as to allow rotation with stable angular positioning α in the position defined by the upper portion 6.

In other words, the frame 4 is divided into two separate parts 5 and 6 so that the entire supporting surface of the upper portion 6 can be used to support the panel 2 even for angled cuts on the panel 2 (as clearly illustrated in Figures 2 and 3).

Taking a closer look at the technical details, the lower portion 5 may comprise a main body 11 for housing the means 7 for connecting and supporting the upper portion 6 positioned cantilever style outside the worktable 1.

This body 11 may be connected to a telescopic arm 12 which supports it and guides its sliding movement, the arm 12 in turn connected to a lower machine frame 13.

The upper portion 6 may comprise a table 14 for supporting the panel 2 consisting of at least two longitudinal bars 14a and 14b and a plurality of joining crosspieces 15, and a rotatable lower connecting - housing zone 16 for the connecting means 7 and with the body 11 of the lower portion 5. On the supporting table 14 there is a fence 14c which can be attached to one bar or the other 14a or 14b.

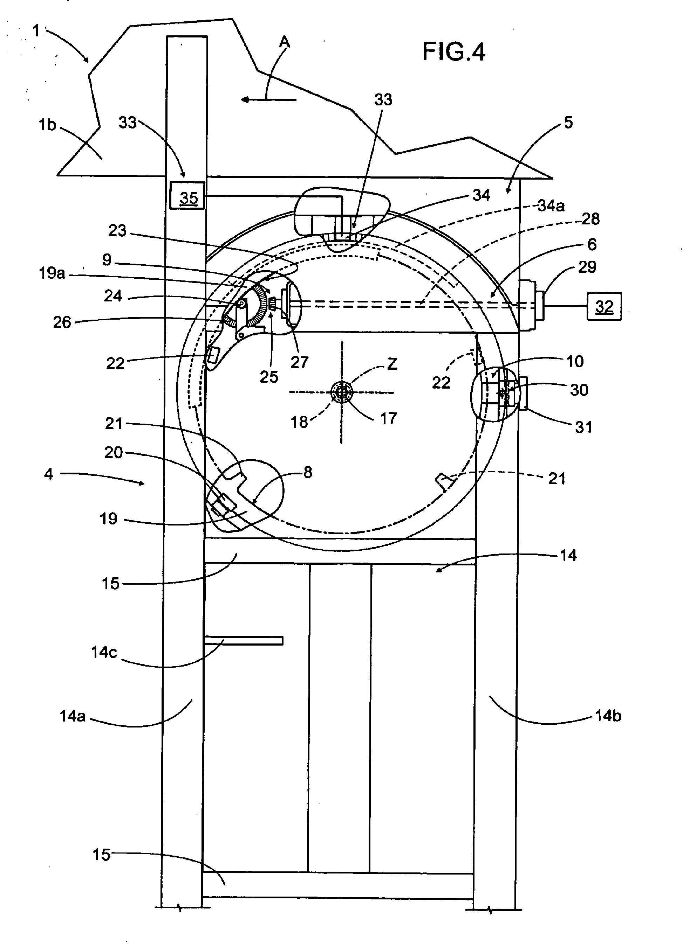

As illustrated in Figures 1 and 4, the connecting means 7 comprises at least:
- parts 8 for free rotation of the upper portion 6 relative to the lower portion 5 about a shared vertical axis Z, and
- parts 9 for precision adjustment of the angular position which can be reached by the upper portion 6 relative to the direction of feed A.

The connecting means 7 may also comprise parts 10 for locking the angular position reached, which operate between the lower portion 5 and the upper portion 6 of the frame 4.

More precisely, the parts 8 for free rotation may comprise a central pin 17 which can rotate, coinciding with the shared vertical axis Z for the two lower and upper portions 5 and 6, the pin being positioned between the lower and upper portions 5 and 6, connected to them and having bearings 18 designed to allow independent rotation of the upper portion 6 relative to the lower portion 5.

The parts 8 for free rotation comprise at least a thrust block unit consisting of a circular plate 19 attached to the upper portion 6 and a plurality of circular supporting and sliding rollers or bearings 20 for the plate 19, positioned in such a way that they project radially from the lower portion 5, and on both sides of and in sliding contact with the circular plate 19.

As illustrated in Figure 4, the plate 19 has end of stroke elements 21 designed to allow extreme angular configurations of the upper portion 6 relative to the direction of feed A.

These end of stroke elements comprise at least one radial projection 21 of the plate 19 projecting towards the inside of the plate 19 and intercepting, during rotation, at least one vertical reference pin 22 positioned on the lower portion 5.

In the case illustrated, two projections 21 are sufficient, with corresponding pins 22 positioned at predetermined angles to define the maximum angular amplitudes in one direction or the other of the upper portion 6 (normally, but without limiting the scope of the invention, 45° - 50° in both directions relative to the direction of feed, forming a working curve).

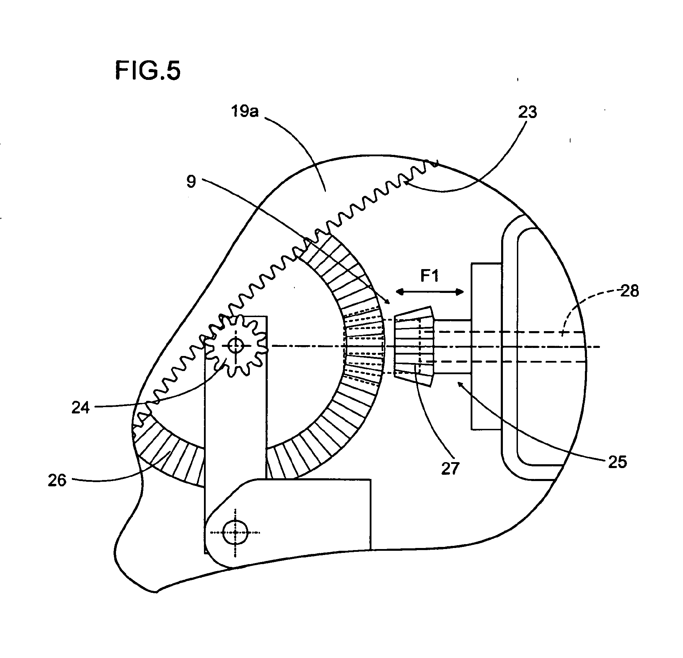

As illustrated in Figures 4 and 5, on the plate 19 there is a part of the parts 9 for precision adjustment comprising a curved portion 19a of the plate 19 with an internal toothed profile 23, extending along the working rotation curve of the upper portion 6 in both directions, forming a curved rack.

This toothed profile 23 meshes with a relative gear wheel 24 controlled by control means 25 positioned on the frame 4 and designed to allow a micrometric rotation of the upper portion 6 when required.

The control means 25 may comprise a first bevel gear 26 with circular extension kinematically connected to the gear wheel 24 and a second bevel gear 27 which can mesh with the first gear 26 by means of a control shaft 28 to which the second gear 27 is attached.

The shaft 28 can slide longitudinally (see arrows F1), allowing, respectively, an operative approach with meshing of the two gears 26 and 27 (position illustrated with a dashed line in Figure 5) and non-operative distancing of the gears 26 and 27 from one another (position illustrated with a continuous line in Figure 5).

The shaft 28 is attached to a knob or handwheel 29 projecting from the lower portion 5 and designed to allow the shaft 28 to slide in both directions, allowing the approach or distancing of the kinematic connection between the two gears 26 and 27. Obviously, the gears may be substituted with friction wheels without this limiting the embodiment in question.

The above-mentioned parts 10 for locking the upper portion 6 may comprise a clamp unit 30 positioned on the lower portion 5 and operating on the thrust block 19 attached to the upper portion 6.

This clamp unit 30 basically forms an interference element on the plate 19 when activated by means of an external control element 31, which controls the clamp unit 30, outside the lower portion 5 (for example another knob).

The connecting means 7 may also be connected to means 33 for checking and displaying the angle α of inclination reached by the upper portion 6 relative to the direction of feed A.

These checking and display means 33 may comprise (see Figure 4) a magnetic reading sensor 34 positioned close to the circular plate 19, with a magnetic reference strap 34a.

The sensor 34 is in turn connected to an element 35 for displaying the angle α reached by the upper portion 6, which may be positioned on the upper portion 5.

Another accessory may be applied on the frame 4, this time adding a drive unit 32 to the connecting means, for example connected directly to the micrometric adjusting parts 9.

The drive unit 32, schematically illustrated, may be activated from the outside to allow automatic rotation of the upper portion 6 until the required angle of inclination is reached.

If this drive unit 32 were present, the means 33 for checking and displaying the angle could consist of an encoder (not illustrated) connected to the motor or to a reduction unit shaft, if necessary for movement of the upper portion 6.

The frame structured in this way is used by the operator in a very simple and rapid way.

In order to make an angled cut, the operator, with the frame 4 in the initial position at a right angle to the direction of feed A, moves the frame 4 to the predetermined position relative to the tool 3 and locks the frame 4 on the mobile portion 1b to allow normal adjustment operations.

At this point the operator releases the clamp unit 30 and turns the upper portion 6 relative to the lower portion 5 until the required angle α is reached.

The operator can then lock the upper portion 6 again with the clamp unit 30, or use the precision adjustment parts 9 to reach particular angular positions.

After locking the position, the operator places the panel 2 to be machined on the upper portion 6, defines the usual linear cutting measurements on the panel 2 (using known systems) and starts the cutting operations.

Therefore, the machine with a frame structured in this way fulfils the preset aims thanks to a frame architecture which allows the entire supporting surface of the upper portion of the frame to be used and, as a result, the increased supporting surface for the panel reduces the possibility of deformation of the plane on which the panel lies, and so of any errors in the position and direction of the panel cutting line.

The possibility of rotating the upper portion, therefore, allows more convenient and simpler panel positioning and cutting, which is further simplified by the micrometric positioning parts, which can be used to control the achievement of very precise angles. Moreover, the two parts of the frame do not substantially change the dimensions of the frame, which are similar to those of the standard frames currently used, but allow many operations.

The invention described has evident industrial applications and may be subject to modifications and variations without thereby departing from the scope of independent claim 1.

## Claims

1. A machine for machining panels comprising at least:
- a worktable (1) consisting of a fixed supporting portion (1a) and a portion (1b) mobile, in both directions, along the direction of feed (A) for sliding the panel to be cut;
- a machining tool (3) positioned on the fixed portion (1a) of the worktable (1) and partly projecting from the table (1);
- a supporting frame (4) for the panel (2) to be machined, attached to the mobile portion (1b) of the worktable (1), and projecting from the table (1), the frame (4) comprising:
- a lower portion (5) at a fixed angle to the direction of feed (A) and supporting
- an upper portion (6) for supporting the panel (2), it being possible to position the upper portion at angles, in both directions, relative to the direction of feed (A);
- means (7) connecting the upper portion (6) to the lower portion (5), inserted between the upper portion (6) and the lower portion (5) of the frame (4) in such a way as to allow rotation with stable angular positioning (α) in the position defined by the upper portion (6); said connecting means (7) comprising at least parts (8) for free rotation of the upper portion (6) relative to the lower portion (5) about a shared vertical axis (Z) ; the machine being **characterised in that** the supporting frame (4) is coplanar with the mobile portion (1b) of the worktable (1); **in that** said connecting means (7) further comprise parts (9) for precision adjustment of the angular position which can be reached by the upper portion (6) relative to the direction of feed (A); and **in that** said parts (8) for free rotation comprise a thrust block unit consisting of a circular plate (19) attached to the upper portion (6) and a plurality of circular supporting and sliding rollers or bearings (20) for the plate (19), the rollers or bearings being positioned in such a way that they project radially from the lower portion (5), and are in sliding contact with both sides of the circular plate (19); the plate (19) having end of stroke elements (21) designed to allow upper portion (6) extreme angular configurations relative to a direction of feed (A); the end of stroke elements comprising at least one radial projection (21) of the plate (19) projecting towards the inside of the plate (19) and intercepting at least one vertical reference pin (22) positioned on the lower portion (5).

2. The machine according to claim 1, **characterised in that** the connecting means (7) also comprise parts (10) for locking the position reached and operating between the lower portion (5) and the upper portion (6) of the frame (4).

3. The machine according to claim 1, **characterised in that** the lower portion (5) comprises a main body (11) housing the means (7) for connecting and supporting the upper portion (6) positioned cantilever style outside the worktable (1); the body (11) being connected to a telescopic support and guide arm (12) connected to a machine frame (13).

4. The machine according to claim 1, **characterised in that** the upper portion (6) comprises a panel supporting table (14) consisting of at least two longitudinal bars (14a, 14b) and a plurality of joining crosspieces (15) and a rotatable lower connecting - housing zone (16) with the connecting means (7) and the lower portion (5) of the frame (4).

5. The machine according to claim 1, **characterised in that** the free rotation parts (8) further comprise a central pin (17) which can rotate, with the vertical axis (Z) shared by the lower portion (5) and the upper portion (6), the pin being positioned between the lower portion (5) and the upper portion (6), connected to them and having bearings (18) designed to allow rotation of the upper portion (6) relative to the lower portion (5).

6. The machine according to claim 1**, characterised in that** on the plate (19) there is a part of the precision adjustment parts (9) comprising a curved portion (19a) of the plate (19) with an internal toothed profile (23), extending in an upper portion (6) working rotation curve in both directions, forming a rack; the toothed profile (23) meshing with a gear wheel (24) controlled by control means (25) positioned on the frame (4) and designed to allow micrometric rotation of the upper portion (6) when required.

7. The machine according to claim 6, **characterised in that** the control means (25) comprise a first bevel gear (26) with circular extension kinematically connected to the gear wheel (24) and a second bevel gear (27) which can mesh with the first bevel gear (26) by means of a control shaft (28), sliding longitudinally, allowing respectively, an operative approach with meshing between the first and second gears (26, 27) and relative non-operative distancing of the gears (26, 27) from one another; the shaft (28) being attached to a knob (29) projecting from the lower portion (5) and designed to allow the shaft (28) to slide in both directions, thus allowing the approach or distancing of the kinematic connection between the gears (26, 27).

8. The machine according to claim 2, **characterised in that** the locking parts (10) comprise a clamp unit (30) positioned on the lower portion (5) and operating on part of the connecting means (7), the latter consisting of a circular plate (19) attached to the upper portion (6); the clamp unit (30) being controlled by a control element (31) outside the lower portion (5).

9. The machine according to claim 1, **characterised in that** the connecting means (7) have a drive unit (32) which can be activated from the outside and is designed to allow automatic rotation of the upper portion (6).

10. The machine according to claim 1, **characterised in that** the connecting means (7) are connected to means for (33) checking and displaying the angle (α) of inclination reached by the upper portion (6) relative to the direction of feed (A).

11. The machine according to claim 10, **characterised in that** the checking and displaying means (33) comprise a magnetic reading sensor (34) positioned close to a circular thrust block (19), forming part of the connecting means (7), with a magnetic reference strap (34a); the sensor (34) being connected to an element. (35) for displaying the angle (α) reached by the upper portion (6) and positioned on the upper portion (6) itself.

## Patentansprüche

1. Maschine zum Bearbeiten von Platten, die zumindest Folgendes beinhaltet:
- einen Arbeitstisch (1), bestehend aus einem feststehenden tragenden Abschnitt (1a) und einem Abschnitt (1b), der in beiden Richtungen entlang einer Vorschubrichtung (A) beweglich ist, um das Gleiten der zu schneidenden Platte zu ermöglichen;
- ein Bearbeitungswerkzeug (3), das an dem feststehenden Abschnitt (1a) des Arbeitstisches (1) angeordnet ist und teilweise über den Tisch (1) hervorsteht;
- einen Trägerrahmen (4) für die zu bearbeitende Platte (2), der am beweglichen Abschnitt (1b) des Arbeitstisches (1) angebracht ist und über den Tisch (1) hervorragt, wobei der Rahmen (4) Folgendes beinhaltet:
- einen unteren Abschnitt (5), der eine feste Winkelstellung bezogen auf die Vorschubrichtung (A) einnimmt und als Träger dient für
- einen oberen Abschnitt (6) zur Auflage der Platte (2), dessen Winkelstellung bezogen auf die Vorschubrichtung (A) in beiden Richtungen verstellbar ist;
- Mittel (7) zur Verbindung des oberen Abschnittes (6) mit dem unteren Abschnitt (5), die derart zwischen dem oberen Abschnitt (6) und dem unteren Abschnitt (5) des Rahmens (4) eingefügt sind, dass sie eine Drehung mit stabiler Winkelpositionierung (α) in der Stellung ermöglichen, die von dem oberen Abschnitt (6) bestimmt wird; worin diese Verbindungsmittel (7) zumindest Teile (8) für die freie Drehung des oberen Abschnittes (6) im Verhältnis zum unteren Abschnitt (5) um eine gemeinsame vertikale Achse (Z) beinhalten; wobei die Maschine **dadurch gekennzeichnet ist, dass** der Trägerrahmen (4) koplanar mit dem beweglichen Abschnitt (1b) des Arbeitstisches (1) ist; dass die Verbindungsmittel (7) ferner Teile (9) für die Feineinstellung der Winkelstellung beinhalten, die von dem oberen Abschnitt (6) im Verhältnis zur Vorschubrichtung (A) eingenommen werden kann; und dass die genannten Teile (8) für die freie Drehung eine Drucklagereinheit beinhalten, die aus einer kreisförmigen Platte (19), die am oberen Abschnitt (6) angebracht ist, sowie mehreren kreisförmigen Stütz- und Gleitrollen oder -lager (20) für die Platte (19) besteht, wobei die Rollen oder Lager derart angeordnet sind, dass sie radial vom unteren Abschnitt (5) hervorstehen und im Gleitkontakt mit beiden Seiten der kreisförmigen Platte (19) stehen; wobei die Platte (19) Endlagenelemente (21) aufweist, die dazu vorgesehen sind, dem oberen Abschnitt (6) extreme Winkelkonfigurationen bezogen auf die Vorschubrichtung (A) zu ermöglichen; wobei die Endlagenelemente zumindest einen radialen Vorsprung (21) von der Platte (19) beinhalten, der zu der Innenseite der Platte hin (19) hervorsteht und zumindest einen vertikalen Bezugsstift (22) abfängt, der auf dem unteren Abschnitt (5) angeordnet ist.

2. Maschine nach Anspruch 1, **dadurch gekennzeichnet, dass** die Verbindungsmittel (7) auch Teile (10) zum Sichern der eingenommenen Position enthalten, die zwischen dem unteren Abschnitt (5) und dem oberen Abschnitt (6) des Rahmens (4) wirken.

3. Maschine nach Anspruch 1, **dadurch gekennzeichnet, dass** der untere Abschnitt (5) ein Hauptgehäuse (11) beinhaltet, in dem die Mittel (7) zum Verbinden und Tragen des oberen Abschnitts (6) untergebracht sind und das auskragend außerhalb des Arbeitstischs (1) angeordnet ist; wobei das Gehäuse (11) mit einem Teleskop-Träger- und Führungsarm (12) verbunden ist, der am Maschinenrahmen (13) angebracht ist.

4. Maschine nach Anspruch 1, **dadurch gekennzeichnet, dass** der obere Abschnitt (6) einen Plattenauflagetisch (14) beinhaltet, der aus mindestens zwei Längsstangen (14a, 14b) und mehreren Querverbindungen (15) sowie einem drehbaren unteren Verbindungs- bzw. Aufnahmebereich (16) mit den / für die Verbindungsmittel (7) und dem unteren Abschnitt (5) des Rahmens (4) besteht.

5. Maschine nach Anspruch 1, **dadurch gekennzeichnet, dass** die Teile (8) für die freie Drehung ferner einen drehbaren mittleren Stift (17) beinhalten, der eine gemeinsame vertikale Achse (Z) mit dem unteren Abschnitt (5) und dem oberen Abschnitt (6) aufweist, wobei der Stift zwischen dem unteren Abschnitt (5) und dem oberen Abschnitt (6) angeordnet, mit diesen verbunden ist und mit Lagern (18) versehen ist, die das Drehen des oberen Abschnitts (6) im Verhältnis zum unteren Abschnitt (5) ermöglichen.

6. Maschine nach Anspruch 1, **dadurch gekennzeichnet, dass** sich auf der Platte (19) ein Teil der Feineinstellteile (9) befindet, die einen gebogenen Abschnitt (19a) der Platte (19) mit einem Profil (23) mit Innenzahnung beinhalten, der sich über einen Nutzarbeitsbogen für die Drehung des oberen Abschnitts (6) in beiden Richtungen erstreckt und somit eine Zahnstange bildet; wobei das Zahnprofil (23) in ein Zahnrad (24) eingreift, das über Steuereinrichtungen (25) gesteuert wird, die auf dem Rahmen (4) angeordnet sind und dazu dienen, bei Bedarf die mikrometrische Drehung des oberen Abschnittes (6) zu ermöglichen.

7. Maschine nach Anspruch 6, **dadurch gekennzeichnet, dass** die Steuereinrichtungen (25) ein erstes Kegelrad (26) mit kreisförmiger Ausdehnung beinhaltet, das kinematisch mit dem Zahnrad (24) verbunden ist, und ein zweites Kegelrad (27), das mit dem ersten Kegelrad (26) in Eingriff gebracht werden kann, und zwar über eine Steuerwelle (28), die längs gleiten kann, um eine operative Annäherungsbewegung zu ermöglichen, die den Eingriff zwischen dem ersten und zweiten Kegelrad (26, 27) bewirkt, und eine entsprechende nicht-operative Auseinanderbewegung der Kegelräder (26, 27); wobei die Welle (28) mit einem Knopf (29) verbunden ist, der vom unteren Abschnitt (5) hervorsteht und dazu dient, die Gleitbewegung der Welle (28) in beide Richtungen zu ermöglichen, um die Annäherungs- oder Auseinanderbewegung der kinematischen Verbindung zwischen den Kegelrädern (26, 27) zu erlauben.

8. Maschine nach Anspruch 2, **dadurch gekennzeichnet, dass** die Sicherungsteile (10) eine Spanneinheit (30) beinhalten, die auf dem unteren Abschnitt (5) angeordnet ist und auf einen Teil der Verbindungsmittel (7) wirken, welche aus einer kreisförmigen Platte (19) bestehen, die am oberen Abschnitt (6) angebracht ist; wobei die Spanneinheit (30) durch ein Steuerelement (31) außerhalb des unteren Abschnittes (5) gesteuert wird.

9. Maschine nach Anspruch 1, **dadurch gekennzeichnet, dass** die Verbindungsmittel (7) eine Antriebseinheit (32) aufweisen, die von außerhalb aktiviert werden kann und dazu dient, die automatische Drehung des oberen Abschnittes (6) zu ermöglichen.

10. Maschine nach Anspruch 1, **dadurch gekennzeichnet, dass** die Verbindungsmittel (7) mit Mitteln (33) zur Überprüfung und Anzeige des Winkels (α) der Schrägstellung des oberen Abschnitts (6) im Verhältnis zur Vorschubrichtung (A) verbunden sind.

11. Maschine nach Anspruch 10, **dadurch gekennzeichnet, dass** die Überprüfungs- und Anzeigemittel (33) einen magnetischen Lesesensor (34) beinhalten, der in der Nähe des kreisförmigen Drucklagers (19) angeordnet ist, das einen Teil der Verbindungsmittel (7) bildet und mit einem magnetischen Referenzband (34a) versehen ist; wobei der Sensor (34) mit einem Element (35) verbunden ist, das zur Anzeige des vom oberen Abschnitt (6) eingenommenen Winkels (α) dient und auf dem oberen Abschnitt (6) angeordnet ist.

## Revendications

1. Une machine à usiner des panneaux comprenant au moins :
- une table d'usinage (1) constituée d'une partie de support (1a) fixe et d'une partie (1b) mobile, dans les deux directions, le long de la direction d'avancement (A) pour le coulissement du panneau à couper ;
- un outil d'usinage (3) positionné sur la partie fixe (1a) de la table d'usinage (1) et dépassant partiellement de cette même table (1) ;
- un châssis (4) pour le support du panneau (2) à usiner, associé à la partie mobile (1b) de la table d'usinage (1) et dépassant de cette même table (1), le châssis (4) comprenant :
- une partie inférieure (5) formant un angle fixe par rapport à la direction d'avancement (A) et supportant
- une partie supérieure (6) servant à supporter le panneau (2), ladite partie supérieure pouvant être inclinée selon différents angles, dans les deux directions, par rapport à la direction d'avancement (A) ;
- des moyens (7) d'accouplement de la partie supérieure (6) avec la partie inférieure (5), interposés entre la partie supérieure (6) et la partie inférieure (5) du châssis (4) de manière à permettre une rotation avec positionnement angulaire (α) stable dans la position définie par la partie supérieure (6) ; lesdits moyens d'accouplement (7) comprenant au moins des organes (8) pour la libre rotation de la partie supérieure (6) par rapport à la partie inférieure (5) autour d'un axe vertical (Z) commun ; la machine étant **caractérisée en ce que** le châssis (4) de support est coplanaire à la partie mobile (1b) de la table d'usinage (1), **en ce que** lesdits moyens d'accouplement (7) comprennent en outre des organes (9) pour le réglage de précision de la position angulaire pouvant être atteinte par la partie supérieure (6) par rapport à la direction d'avancement (A), et **en ce que** lesdits organes (8) de libre rotation comprennent un groupe de butée constitué d'une plaque circulaire (19) associée à la partie supérieure (6) et d'une pluralité de rouleaux ou paliers (20) circulaires de support et de coulissement de ladite plaque (19), les rouleaux ou paliers étant positionnés de manière à saillir radialement de la partie inférieure (5) et étant en contact de coulissement avec les deux côtés de la plaque circulaire (19) ; la plaque (19) ayant des éléments de fin de course (21) destinés à permettre des configurations angulaires extrêmes de la partie supérieure (6) par rapport à la direction d'avancement (A), lesdits éléments de fin de course comprenant au moins une saillie radiale (21) de la plaque (19) saillant vers l'intérieur de ladite plaque (19) et interceptant au moins une goupille de référence (22), verticale, située sur la partie inférieure (5).

2. La machine selon la revendication 1, **caractérisée en ce que** les moyens d'accouplement (7) comprennent aussi des organes (10) servant à bloquer la position atteinte et agissant entre la partie inférieure (5) et la partie supérieure (6) du châssis (4).

3. La machine selon la revendication 1, **caractérisée en ce que** la partie inférieure (5) comprend un corps principal (11) logeant les moyens (7) pour l'accouplement et le support de la partie supérieure (6), positionné en porte-à-faux à l'extérieur de la table d'usinage (1) ; le corps (11) étant associé à un bras télescopique (12) de support et de guidage fixé à un châssis (13) de la machine.

4. La machine selon la revendication 1, **caractérisée en ce que** la partie supérieure (6) comprend une table (14) de support du panneau constituée d'au moins deux barres longitudinales (14a, 14b) et d'une pluralité de traverses (15) de jonction et d'une zone (16), inférieure et rotative, d'accouplement - logement avec les moyens d'accouplement (7) et la partie inférieure (5) du châssis (4).

5. La machine selon la revendication 1, **caractérisée en ce que** les organes (8) de libre rotation comprennent en outre une goupille centrale (17) qui peut tourner avec l'axe vertical (Z) commun à la partie inférieure (5) et à la partie supérieure (6), la goupille étant positionnée entre la partie inférieure (5) et la partie supérieure (6), étant fixée à ces dernières et étant dotée de paliers (18) destinés à permettre la rotation de la partie supérieure (6) par rapport à la partie inférieure (5).

6. La machine selon la revendication 1, **caractérisée en ce qu'**il y a, sur la plaque (19), une partie des organes (9) de réglage de précision comprenant une portion courbe (19a) de cette même plaque (19) dotée d'un profil à denture intérieure (23), s'étendant sur une courbe utile de rotation de la partie supérieure (6), dans les deux directions, et définissant une crémaillère ; le profil denté (23) venant en prise avec une roue dentée (24) asservie à des moyens de commande (25) positionnés sur le châssis (4) et destinés à permettre une rotation micrométrique de la partie supérieure (6) quand cela est nécessaire.

7. La machine selon la revendication 6, **caractérisée en ce que** les moyens de commande (25) comprennent un premier engrenage conique (26) à extension circulaire cinématiquement relié à la roue dentée (24) et un deuxième engrenage conique (27) qui peut se mettre en prise avec le premier engrenage conique (26) par l'intermédiaire d'un arbre de commande (28), coulissant longitudinalement, permettant, respectivement, un rapprochement opérationnel avec mise en prise des premier et deuxième engrenages (26, 27) et un éloignement relatif non opérationnel de ces mêmes engrenages (26, 27) ; l'arbre (28) étant associé à un bouton (29) dépassant de la partie inférieure (5) et destiné à permettre le coulissement dans les deux directions de ce même arbre (28), afin de permettre le rapprochement ou l'éloignement de l'accouplement cinématique entre les engrenages (26, 27).

8. La machine selon la revendication 2, **caractérisée en ce que** les organes (10) de blocage comprennent un groupe de serrage (30) positionné sur la partie inférieure (5) et agissant sur une partie des moyens d'accouplement (7), cette dernière consistant en une plaque circulaire (19) associée à la partie supérieure (6) ; le groupe de serrage (30) étant asservi à un élément de commande (31) situé à l'extérieur de la partie inférieure (5).

9. La machine selon la revendication 1, **caractérisée en ce que** les moyens d'accouplement (7) ont un groupe d'entraînement (32) qui peut être activé de l'extérieur et est destiné à permettre la rotation automatique de la partie supérieure (6).

10. La machine selon la revendication 1, **caractérisée en ce que** les moyens d'accouplement (7) sont reliés à des moyens (33) servant à vérifier et à afficher l'angle (α) d'inclinaison atteint par la partie supérieure (6) par rapport à la direction d'avancement (A).

11. La machine selon la revendication 10, **caractérisée en ce que** les moyens (33) de vérification et d'affichage comprennent un capteur magnétique de lecture (34) positionné à proximité d'une butée circulaire (19), faisant partie des moyens d'accouplement (7), dotée d'un ruban magnétique de référence (34a) ; le capteur (34) étant relié à un élément (35) servant à afficher l'angle (α) atteint par la partie supérieure (6) et placé sur la partie supérieure (6) elle-même.
